# EUROPEAN PATENT SPECIFICATION

(11) **EP 1 372 838 B1**
(45) Date of publication and mention of the grant of the patent: **07.05.2014**
(21) Application number: 02708353.4
(22) Date of filing: 09.03.2002
(51) Int. Cl.: B01J 8/00, B65G 53/52, C21B 13/00

(54) **PROCESS OF CONVEYING GRANULAR SOLIDS**
VERFAHREN ZUR BEFÖRDERUNG KÖRNIGER FESTSTOFFE
PROCEDE DE CONVOYAGE DE SOLIDES EN GRANULES

(30) Priority: 04.04.2001 DE 10116892
(43) Date of publication of application: 02.01.2004
(73) Proprietor: Outotec Oyj, 02230 Espoo (FI)
(72) Inventor: HIRSCH, Martin, 61381 Friedrichsdorf (DE); SNEYD, Stuart, South Perth 6100 (AU); FORMANEK, Lothar, 60529 Frankfurt am Main (DE)
(74) Representative: Keil & Schaafhausen Patent- und Rechtsanwälte
(86) International application number: PCT/EP2002/002630
(87) International publication number: WO 2002/081074

(56) References cited:
- EP-A- 0 159 751
- US-A- 2 978 279
- US-A- 3 106 429
- US-A- 4 327 055
- US-A- 4 444 532

## Description

This invention relates to a process of continuously conveying granular solids according to the preamble of claim 1.

In a direct-reduction plant, the granular solids, e.g. direct-reduced iron, are brought from an elevated pressure to ambient pressure for further processing in a plant. In this plant, hot direct-reduced iron is conveyed from a fluidized-bed reactor to a pressurized cyclone, from where the granular solids are discharged downwards via a storage bin through a descending line. Inert gas is introduced into the descending line.

Via a valve, the descending line is usually connected with an ascending line through which the granular solids are conveyed upwards into an impact pot by supplying inert gas into the ascending line. From said impact pot, the solids are introduced into a briquetting bin while further introducing inert gas. Due to the continuous supply of fine-grained solids, a column of these solids is formed in the descending line, which column at the same time represents a pressure barrier.

When using the previous solution with the valve, the point of transition from the descending line to the ascending line requires much effort and maintenance, as due to the temperature level and the coarse surface of the granular solids the sealings and the closure body are subject to a very high wear and therefore must be replaced quite often.

In accordance with US-A-2,684,873, fine-grained solids are introduced into an inflow tank, the amount supplied again being regulated by means of a valve. In the inflow tank, a supply of fine-grained solids is formed, into which extends a tube through which the solids are transported into a tank disposed at a higher level. A line pressurizing the inflow tank opens into the inflow tank, whereby the solids are transported through the tube into the tank disposed at a higher level.

This known process likewise uses valves for regulating the inflow of solids. For larger amounts of solids to be transported, the inflow tank must be dimensioned correspondingly large, which again makes this apparatus very complex and expensive.

US 2,978,279, upon which the preamble of claim 1 is based, discloses a process for pneumatically conveying granular solids from a first or second higher level by suspending the granular solids in a suitable carrier gas and passing it vertically upward as a confined stream through a lift pipe.

US 4,327,055 discloses a method for continuously regenerating catalyst in a hydrocarbon processing system comprising the steps of withdrawing spent catalyst from the regeneration vessel through a discharge conduit, introducing a fluid stream through a fluidisation nozzle which is located at a junction between the discharge conduit and an upwardly directed carrier pipe wherein the fluidisation gas conveys the catalyst through the carrier pipe, applying an additional air stream through a carrier nozzle at the carrier pipe head and conveying the solids to the spent catalyst hopper via an elbow joint and conduit.

EP 0 159 751 discloses a device for discharging fine grained material from a system at a higher pressure into a receiving chamber at a lower pressure. The material is introduced into a U-shaped submerged seal via a material feed from the system at higher pressure to an inlet arm. The solids are conveyed through a horizontal portion of said U-shaped submerged seal by means of conveying gas introduced via a feed line. The feed line opens into the horizontal portion of the U-shaped submerged seal.

US 3,106,429 describes the elevation of granular solids, in particular of regenerated cracking catalyst. From the catalyst regenerator reactants and cracked products are removed through a line and elevated from an engager through a line to a disengager.

US 4,444,532 discloses a method of and a apparatus for charging particulate matter into a gas stream wherein small particles of comminuted coal for coking purposes are gravity-discharged into a stream of hot gas flowing upwardly in a flight stream tube in a direction inclined generally opposite to the gas flow direction. Just prior to entry into the gas stream the particles are fluidised so that, on being entrained by the gas stream, they will become uniformly distributed through the cross-section of the same.

It is the object underlying the invention that in the above-mentioned process the pressure between two regions be reduced inexpensively and with little maintenance effort while continuously conveying granular solids.

In accordance with the invention, this object is solved by the features of claim 1.

In order to lose as little kinetic energy as possible, the nozzle orifice for the inflow of gas should expediently be disposed as close as possible to the bulk material to be transported. Due to the line of fall of the bulk material, the nozzle orifice should therefore advantageously be disposed at a distance of 0,5 to 8 times the hydraulic diameter of the nozzle orifice below the point of intersection of the tube axes.

Since the fine-grained solids flowing out of the descending line are compacted due to the column standing above the same, it turned out to be advantageous to dispose auxiliary nozzles for loosening up the solids around the pressure line.

It turned out to be particularly advantageous when the solids weight in the ascending line lies in the range from 0.4 to 0.7 times the bulk weight.

With a limited overall height it is expedient to convey the solids via a multi-stage decrease in pressure.

Embodiments of the process will be explained by way of example with reference to the drawing, in which:

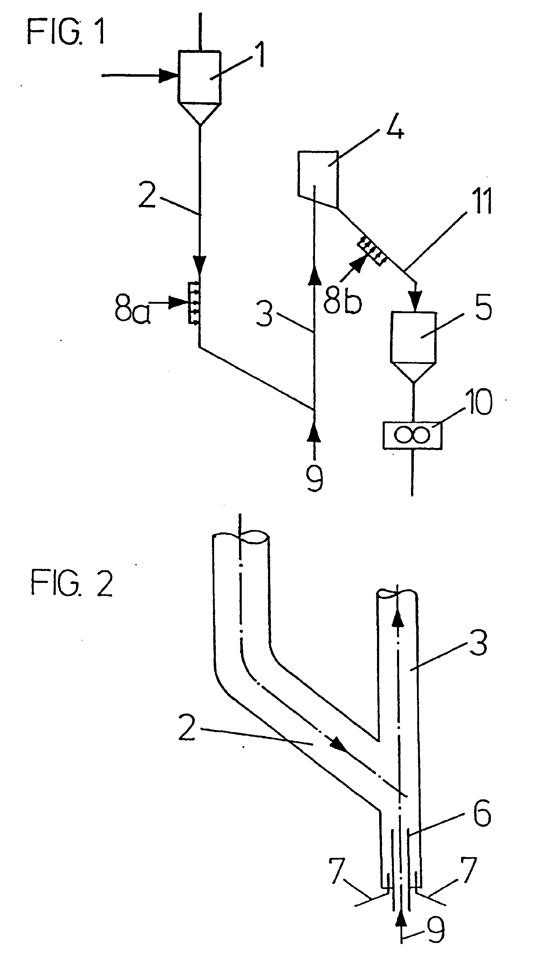

Fig. 1 shows a flow diagram of the process;
Fig. 2 shows a detailed representation of Fig. 1,
Fig. 3 shows a flow diagram of the multi-stage process.

Hot solids are conveyed from a heater into a cyclone (1) at a temperature of 650°C to 800°C. In this cyclone (1), a pressure of 4 to 16 bar exists. The fine-grained solids are discharged downwards via a descending line (2). Into the descending line, inert gas (8a), e.g. nitrogen, is introduced, in order to rinse out the reduction gas.

Subsequent to the descending line, the solids are conveyed upwards into an impact pot (4) by means of an ascending line (3) by supplying carrier gas (9), e.g. nitrogen, in which impact pot the pressure lies in the range from 1 to 2 bar. From said impact pot, the solids are introduced into a briquetting bin (5) and then into a briquetting press (10) by supplying inert gas (8b).

Due to the continuous inflow of fine-grained solids, a column of these solids is formed in the descending line (2), which column at the same time represents a pressure barrier. This column of solids has a height between 2 and 15 m, and the height thereof can be measured by means of a position meter. The column can be regulated by downwardly draining the same.

The flow of solids through the descending line (2) depends on the inert gas inflow (8a), which at the same time influences the height of the solids column in the descending line (2). The pressure at the point where the descending line (2) opens into the ascending line (3) is 4 to 16 bar.

Below the point of intersection of the center line of the descending line (2) with the center line of the ascending line (3), carrier gas (9) is injected via a nozzle (6). The pressure at the nozzle orifice (6) is by 0.5 to 1.5 bar higher than the pressure in the cyclone (1). Via the ascending line (3), the solids are conveyed into an impact pot (4), in which the pressure is 1 to 2 bar. The height of the ascending line from the orifice of the descending line (2) to the overflow bin (4) is 10 to 50 m. The diameter of the ascending line (3) may lie between 0.2 and 1.5 m.

Around the nozzle orifice (6), a plurality of auxiliary nozzles (7) are disposed, which loosen up the solids and transport the same from the nozzle orifice (6) into the range of influence of the carrier gas (9). The same carrier gas is passed through the nozzles (6) and (7).

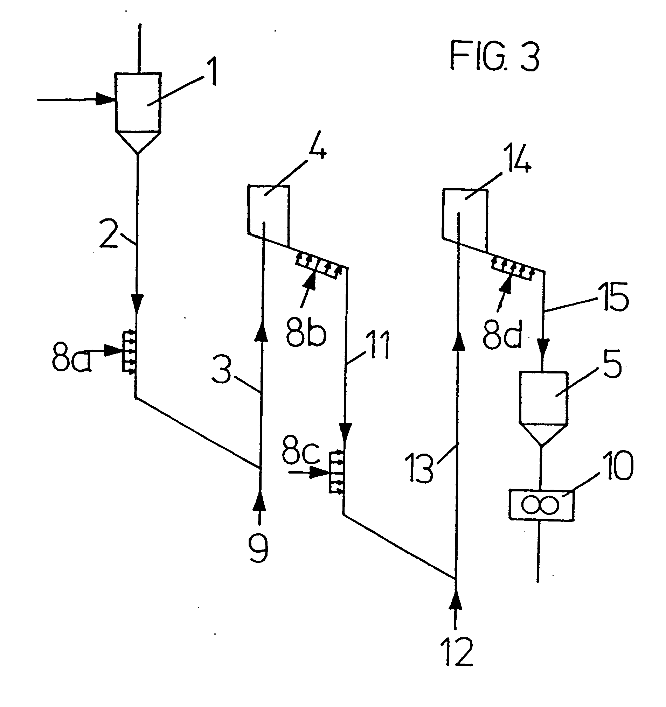

Fig. 3 shows the conveyance of the solids with a multi-stage decrease in pressure. Hot solids are conveyed from a heater into a cyclone (1) at a temperature of 650°C to 800°C. In this cyclone (1), a pressure of 4 to 16 bar exists. The fine-grained solids are discharged downwards through a descending line (2). Into the descending line, inert gas (8a), e.g. nitrogen, is introduced, in order to rinse out the reduction gas.

Subsequent to the descending line (2), the solids are conveyed upwards into an impact pot (4) by means of an ascending line (3) by supplying carrier gas (9), e.g. nitrogen, in which impact pot the pressure lies in the range from 2 to 8 bar. From said impact pot, the solids are conveyed into a second descending line (11) by supplying further inert gas (8b).

Subsequent to the descending line, the solids are conveyed upwards into an impact pot (14) by means of a further ascending line (13) by supplying carrier gas (12), e.g. nitrogen, in which impact pot the pressure lies in the range from 1 to 2 bar. From said impact pot, the solids are introduced into a briquetting bin (5) and then into a briquetting press (10) by supplying inert gas (8b).

### Example 1:

To the cyclone (1), 64 t/h direct-reduced iron is supplied with 40,000 Nm³/h H₂. The temperature is 730°C, the pressure is 4.5 bar. Upon separation of H₂ and solids, the solids are discharged via the descending line (2), which has a diameter of 0.5 m and a length of 16 m. Via line (8a), 70 Nm³/h N₂ are supplied for rinsing the H₂ contained in the void volume. In the ascending line (3) with a diameter of 0.25 m and a length of 25 m, the solids are conveyed into the impact pot (4) via line (3) by adding 150 Nm³/h N₂ through the nozzles (6) and (7). In doing so, the pressure is reduced to 1 bar. From said impact pot, the solids are introduced into a briquetting bin (5) and then into a briquetting press (10) by supplying 30 Nm³/h N₂ (8b).

### Example 2:

To the cyclone (1), 64 t/h direct-reduced iron is supplied with 40,000 Nm³/h H₂. The temperature is 730°C, the pressure is 4.5 bar. Upon separation of H₂ and solids, the solids are discharged via the descending line (2), which has a diameter of 0.5 m and a length of 8 m. Via line (8a), 50 Nm³/h N₂ are supplied for rinsing the H₂ contained in the void volume. In the ascending line (3) with a diameter of 0.25 m and a length of 10 m, the solids are conveyed into the impact pot (4) via line (3) by adding 150 Nm³/h N₂ through the nozzles (6) and (7), in which impact pot a pressure of 3.0 bar is obtained. From said impact pot, the solids are discharged via the descending line (11), which has a diameter of 0.5 m and a length of 8 m. Via lines (8b) and (8c), 50 Nm³/h N₂ are supplied for further removing the H₂ contained in the void volume.

In the ascending line (13) with a diameter of 0.25 m and a length of 15 m, the solids are conveyed into the impact pot by adding 100 Nm³/h N₂ (12) via line (13), in which impact pot a pressure of 1 bar exists. From said impact pot, the solids are introduced into a briquetting bin (5) and then into a briquetting press (10) by supplying 30 Nm³/h N₂ (8d).

## Claims

1. A process of continuously conveying granular solids from a first zone through a descending line and via an ascending line to a second zone with a pressure which is lower than in the first zone, by means of a gaseous medium, wherein the inflow of the gaseous medium is effected through an upwardly directed nozzle at the point where the descending line opens into the ascending line, **characterized in that** the first zone is at a pressure of 4 to 16 bar and that the pressure in the second zone is 3 to 15 bar lower than the pressure of the first zone, and that the solids weight in the ascending line lies in the range from 0.3 to 0.8 times the bulk weight.

2. The process as claimed in claim 1, **characterized in that** the nozzle orifice for the inflow of the gaseous medium is disposed at a distance of 0.5 to 8 times the hydraulic diameter of the nozzle orifice below the point of intersection of the tube axes.

3. The process as claimed in claim 2, **characterized in that** at least one auxiliary nozzle is disposed beside the conveying nozzle.

4. The process as claimed in claims 1, **characterized in that** the solids weight in the ascending line lies in the range from 0.4 to 0.7 times the bulk weight.

5. The process as claimed in claim 1, **characterized in that** the solids are conveyed in a multi-stage decrease in pressure via two descending lines and via two ascending lines.

## Patentansprüche

1. Ein Verfahren zum kontinuierlichem Fördern von körnigen Feststoffen von einer ersten Zone durch eine fallende Leitung und über eine aufsteigende Leitung zu einer zweiten Zone mit einem Druck, der niedriger Druck ist als in der ersten Zone, mittels eines gasförmigen Mediums, wobei der Zustrom des gasförmigen Mediums durch eine aufwärts gerichtete Düse an der Stelle erfolgt, an der die fallende Leitung in die aufsteigende Leitung mündet, **dadurch gekennzeichnet, dass** in der ersten Zone ein Druck von 4 bis 16 bar herrscht und dass der Druck in der zweiten Zone um 3 bis 15 bar niedriger ist als der Druck in der ersten Zone, und dass das Feststoffgewicht in der aufsteigenden Leitung im Bereich des 0,3 bis 0,8 fachen des Schüttgewichtes liegt.

2. Das Verfahren nach Anspruch 1, **dadurch gekennzeichnet, dass** das Düsenmundstück für den Zustrom des gasförmigen Mediums in einem Abstand von 0,5 bis 8 mal dem hydraulischen Durchmesser des Düsenmundstückes unterhalb des Schnittpunktes der Rohrleitungsachsen angeordnet ist.

3. Das Verfahren nach Anspruch 2, **dadurch gekennzeichnet, dass** mindestens eine Hilfsdüse neben der Förderdüse angeordnet ist.

4. Das Verfahren nach Anspruch 1, **dadurch gekennzeichnet, dass** das Feststoffgewicht in der aufsteigenden Leitung im Bereich des 0,4 bis 0,7 fachen des Schüttgewichtes liegt.

5. Das Verfahren nach Anspruch 1, **dadurch gekennzeichnet, dass** die Feststoffe bei einem mehrstufigen Druckabbau über zwei fallende Leitungen und über zwei aufsteigende Leitungen gefördert werden.

## Revendications

1. Procédé de convoyage en continu de solides en granulés d'une première zone, via une ligne descendante et via une ligne ascendante, vers une seconde zone ayant une pression inférieure à la première zone, au moyen d'un agent gazeux, dans lequel l'entrée de l'agent gazeux est effectuée par une buse dirigée vers le haut au point où la ligne descendante ouvre dans la ligne ascendante, **caractérisé en ce que** la première zone est à une pression de 4 à 16 bar et que la pression dans la seconde zone est de 3 à 15 bar inférieure à la pression de la première zone, et que le poids des solides dans la ligne ascendante est situé dans la plage de 0,3 à 0,8 fois le poids en vrac.

2. Procédé selon la revendication 1, **caractérisé en ce que** l'orifice de la buse pour l'entrée de l'agent gazeux est disposée à une distance de 0,5 à 8 fois le diamètre hydraulique de l'orifice de la buse en-dessous du point d'intersection des axes de tube.

3. Procédé selon la revendication 2, **caractérisé en ce qu'**au moins une buse auxiliaire est disposée à côté de la buse de convoyage.

4. Procédé selon la revendication 1, **caractérisé en ce que** le poids des solides dans la ligne ascendante est situé dans la plage de 0,4 à 0,7 fois le poids en vrac.

5. Procédé selon la revendication 1, **caractérisé en ce que** les solides sont convoyés via deux lignes descendantes et via deux lignes ascendantes dans une baisse de pression par paliers multiples.
